# EUROPEAN PATENT APPLICATION

(11) **EP 2 900 017 A1**
(43) Date of publication of application: **29.07.2015**
(21) Application number: 14305087.0
(22) Date of filing: 22.01.2014
(51) Int. Cl.: H04W 48/20, H04W 12/08

(54) **Method for selecting an access point based on reputation information**

(71) Applicant: ALCATEL LUCENT, 92100 Boulogne-Billancourt (FR)
(72) Inventor: Clevy, Laurent, 91620 NOZAY (FR); Ansiaux, Arnaud, 91620 NOZAY (FR)
(74) Representative: Novagraaf Technologies

(57) **Abstract**

A method is intended for allowing a wireless communication equipment (1₁), client of a mobile network operator, to select an access point (2₁) amongst several one located in an area (3) and offering a local access to at least one communication network. This method comprises a step (i) during which, when this wireless communication equipment (1₁) enters this area (3), it establishes a communication with a server (4₁) of its mobile network operator, via a wireless communication network, to retrieve main information representative at least of a reputation of access points (2₁-2₄) detected into this area (3), and a step (ii) during which this wireless communication equipment (1₁) selects one (2₁) of these detected access points based on this retrieved information to access locally to the communication network.

## Description

### Field of the Invention

The present invention relates to wireless communication equipments, and more precisely to connection of wireless communication equipments to access points.

### Background

A lot of public areas, like airports, train stations or shopping malls, comprises access points offering local access to communication networks, like Internet. This type of access, which can be performed via WiFi, Bluetooth or NFC connections, is often preferred by users of wireless communication equipments instead of a connection via a wireless communication network (for instance 2G, 3G or LTE) because it is generally free of charge (or cheaper) and/or offers a larger bandwidth.

Unfortunately a connection to an unknown access point can lead to information leaks or network attacks. For instance, ill-intentioned WiFi web portals hosted on ill-intentioned access points can be used to steal WiFi connection credentials, or to introduce malware into private networks.

Some solutions exist for protecting wireless communication equipments against attacks.

For instance, it is possible to setup a virtual private network (or VPN) to protect application traffic. But, such a setup needs several interventions that a lot of users are not able to carry out (because they generally lack of skills).

It is also possible to conduct regular security audits on access points, for instance by using tools like NetStumbler® (or Network Stumbler®). But it is a costly task, and it might not detect ill-intentioned (or rogue) access points that appeared very recently.

### Summary

So an object of this invention is to improve the situation by allowing mobile network operators to provide their clients with a service intended for protecting them from connecting to unsafe access point to avoid attacks or compromissions.

In a first embodiment, a method is intended for allowing a wireless communication equipment, whose user is a client of a mobile network operator, to select an access point amongst several one located in an area and offering a local access to at least one communication network. This method comprises:
- a step (i) during which, when the wireless communication equipment enters the area, it establishes a communication with a server of its mobile network operator, via a wireless communication network, to retrieve main information representative at least of a reputation of access points detected into this area, and
- a step (ii) during which this wireless communication equipment selects one of these detected access points based on this retrieved information to access locally to the communication network.

The method may include additional characteristics considered separately or combined, and notably:
- the retrieved main information may comprise at least a reputation level computed from primary information provided by wireless communication equipments having accessed locally to the communication network via the access points of the area;
- the primary information may comprise data defining an access point, a type of an event detected into a wireless communication equipment during a local access to this access point and a date of occurrence of this detected event and/or a time of occurrence of this detected event and/or a duration of this detected event, each event type being an attack or a good behaviour;
- each reputation level of an access point may be equal to the sum of main values associated respectively to the different wireless communication equipments having detected events during a local access via this access point, and each equal to the result of a multiplication between a first value defining the type of detected event and a second value representative of a freshness of this detected event;
- each wireless communication equipment may be arranged for providing its primary information to the server of its mobile network operator either via a wireless communication network or via the selected access point it is connected to;
- the retrieved main information may further comprise a reputation age representative of a date at which a last corresponding reputation level has been computed from primary information and/or data justifying this last corresponding reputation level;
- once a wireless communication equipment has accessed locally to the communication network via a detected access point of the area, each new or updated main information relative to a detected access point of this area may be transmitted by the server to this wireless communication equipment via the detected access point;
- the wireless communication equipment may detect any access point of the area either by a radio connection scanning, or by a determination based on its geographical location, or else by an interpolation based on respective locations of antennas of a wireless communication network located into the area;
- the servers of at least some mobile network operators may be arranged for retrieving main information one from the other and for updating their main information from this retrieved main information.

In a second embodiment, a computer program product comprises a set of instructions arranged, when it is executed by processing means, for performing the method according to one of the preceding claims to allow a wireless communication equipment, whose user is a client of a mobile network operator, to select an access point amongst several one located in an area.

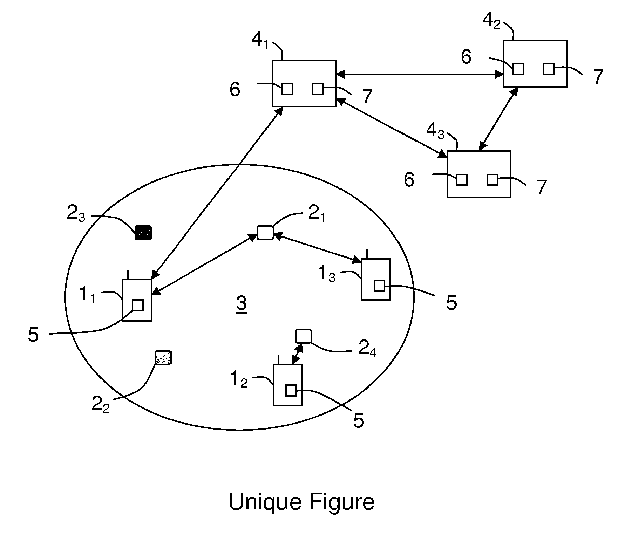

### Brief Description of the Figure

Some embodiments of device and radio equipments in accordance with embodiments of the present invention are now described, by way of example only, and with reference to the accompanying drawing, in which, the unique Figure schematically and functionally illustrates an area comprising access points to which wireless communication equipments, comprising a first device according to the invention, may locally access to establish connections with a communication network.

### Description of Embodiments

Hereafter is notably disclosed a method intended for allowing wireless communication equipments 1ₖ, whose users are clients of mobile network operator(s), to select an access point 2ⱼ amongst several one located in an area 3.

In the following description it will be considered that the wireless communication equipments 1ₖ are smartphones. But this is not limited to this kind of wireless communication equipment. Indeed, it concerns any type of wireless communication equipment capable of establishing communications with other wireless communication equipments or network equipments via at least one wireless communication network and also via access points. So, a wireless communication equipment 1ₖ could be also a tablet or a laptop, for instance.

Moreover in the following description it will be considered that the wireless communication equipments 1ₖ are capable of establishing connections with networks. But this is not limited to this kind of wireless communication network. Indeed, they could be also capable of establishing connections with a 2G network, or a 2.5G network, or a 3G network, or else a 4G network, for instance.

More in the following description it will be considered that the access points 2ⱼ are capable of establishing WiFi connections with the wireless communication equipments 1ₖ. But this is not limited to this kind of access point. Indeed, they could be also capable of establishing Bluetooth connections or NFC connections with the wireless communication equipments, for instance.

An example of area 3 comprising several access points 2ⱼ is schematically illustrated in the unique Figure. In this non-limiting example, the area 3 comprises four access points 2ⱼ (j = 1 to 4). But it could comprise less or more than four access points 2ⱼ (for instance, 1, 2, 3, or 5). Each access point 2ⱼ offers connections to at least one communication network, like the Internet, for instance.

The user of each wireless communication equipments 1ₖ is a client of at least one wireless network operator comprising at least one information server 4ᵢ. Three servers 4ᵢ (i = 1 to 3) have been sketched in the non-limiting example illustrated in the unique Figure. But the invention may be implemented as soon as there is at least one server 4ᵢ.

As mentioned before, the invention notably proposes a method intended for allowing wireless communication equipments 1ₖ to select an access point 2ⱼ amongst several one located in the area 3. This method comprises two steps (i) and (ii).

A first step (i) of this method is initiated each time a wireless communication equipment 1ₖ enters an area 3. In this situation the wireless communication equipment 1ₖ establishes a communication with a server 4ᵢ of the mobile network operator of its user, via a wireless communication network, to retrieve main information representative at least of a reputation of access points 2ⱼ detected into this area 3.

This first step (i) may be triggered and controlled by a first device 5 that is comprised into each wireless communication equipments 1ₖ.

Such a first device 5 is preferably made of software modules, at least partly. But it could be also made of a combination of hardware and software modules. In case where it is made of software modules it can be stored in a memory, possibly after having been downloaded, or in any computer software product.

Each first device 5 is coupled to a module of its wireless communication equipment 1ₖ that is in charge of detecting any access point 2ⱼ contained and (radio) visible into an area 3 into which it enters.

Such a module may be arranged for detecting any access point 2ⱼ of the area 3 (in step (i) or just before step (i)) either by a radio connection scanning, or by a determination based on its geographical location (may be a GPS one), or else by an interpolation based on respective locations of antennas of a wireless communication network that is located into this area 3.

Once the first device 5 knows the detected access points 2ⱼ, it triggers the establishment of a connection of its wireless communication equipment 1ₖ with the corresponding server 4ᵢ.

The retrieved main information may comprise at least a reputation level RL(j) that is computed from primary information provided by wireless communication equipments 1ₖ having accessed locally to the communication network via the access points 2ⱼ of the area 3.

A primary information is any type of information representative of a local access of a wireless communication equipments 1ₖ to an access point 2ⱼ. So, it may comprise, for instance:
- data defining an access point 2ⱼ, like a MAC address, or an IP address, or an access point name, or else a geographical location,
- data defining the type of an event detected into a wireless communication equipment 1ₖ during a local access to an access point 2ⱼ. One means here by "event type" either an attack or a good behaviour, and
- a date of occurrence of this detected event, and/or
- a time of occurrence of this detected event, and/or
- a duration of this detected event.

For instance, the first device 5 may be arranged for detecting network aggressive behaviours (or attacks) against its wireless communication equipment 1ₖ, and notably active WiFi WEP ("Wired Equivalent Privacy") and/or WPA attacks ("WiFi protected Access") and/or TCP connection reset. So, if an access point 2ⱼ behaves normally before a connection and then becomes aggressive, it will be detected by the first device 5. This will not help to protect its wireless communication equipment 1ₖ, but this primary information could be used to protect almost immediately or later other wireless communication equipments 1_{k'} against this aggressive access point 2ⱼ.

Such a first device 5 may offer a basic firewall and intrusion detection function. In this case it is capable of detecting port scans (when an attacker is trying to determine available network services and OS version), and brute force attacks (when an attacker is trying to guess passwords needed to use protected network service by exhaustive search). So, it may record the attack type (port scan or password brute forcing) and/or the source IP and MAC addresses and/or the attack payload details (first 64 bytes for example) and/or the attack date and time and/or the network context (access points seen with radio level and their respective MAC addresses) and/or GPS coordinates if available and/or 3G/LTE coordinates (less accurate than the GPS coordinates).

Each server 4i (that receives the primary information transmitted by wireless communication equipments 1ₖ of clients) may advantageously comprise a second device 6 arranged for computing each reputation level RL(j) of each access point 2ⱼ at least from the received primary information concerning this access point 2ⱼ.

Such a second device 6 is preferably made of software modules, at least partly. But it could be also made of a combination of hardware and software modules. In case where it is made of software modules it can be stored in a memory, possibly after having been downloaded, or in any computer software product.

For instance, and for a second device 6, each reputation level RL(j) of an access point 2ⱼ may be equal to the sum of main values MV(j,k) associated respectively to the different wireless communication equipments 1ₖ that have detected an event during a local access via this access point 2ⱼ. A main value MV(j,k) is equal to the result of a multiplication between a first value V1 (j,k) defining the type of the detected event and a second value V2(j,k) representative of a freshness of this detected event. So, RL(j) = ΣₖMV(j,k) = Σₖ(V1 (j,k)*V2(j,k)).

For instance, an attack may give a negative first value V1 (j,k), while a good behaviour may give a positive first value V1(j,k). The magnitude of the first value V1(j,k) may represent the importance of the event (notably when it is an attack) and/or its duration. Also for instance, the more recent the detection of an event has been done by a first device 5, the highest the second value (or freshness factor) V2(j,k) will be. As an example, V2(j,k) may be equal to 100 for less than 24 hours, to 10 for less than one week, and to 1 for more than one week.

So, any access point 2ⱼ may be categorized or classified, for instance, as "unknown" (which corresponds to a light grey color in the unique Figure, for example), or "malicious" (when RL(j) is negative - which corresponds to a black color in the unique Figure, for example), or "safe" (when RL(j) is positive - which corresponds to a white color in the unique Figure, for example), or "suspicious" (when RL(j) often change between negative and positive - which could be represented by a dark grey, for instance). A freshness of a reputation level RL(j) may be also computed, for example as the average of second values (or freshness factors) V2(j,k) originating from different wireless communication equipments 1ₖ.

Each wireless communication equipment 1ₖ may be arranged for providing its primary information, on request of its first device 5, to the server 4ᵢ of its mobile network operator either via a wireless communication network (i.e. after having been connected to an access point 2ⱼ), or via a selected access point 2ⱼ it is connected to (as long as the latter (2ⱼ) remains safe).

Preferably, a retrieved main information may further comprise a reputation age that is representative of the date at which a last corresponding reputation level RL(j) has been computed from primary information and/or data justifying this last corresponding reputation level RL(j). This reputation age may be, for instance, the freshness of a reputation level RL(j) computed from the second values (or freshness factors) V2(j,k) originating from different wireless communication equipments 1ₖ. A justification data maybe, for instance, "attack seen earlier", or "good behaviour" or "certificate expired last month".

Also preferably, once a wireless communication equipment 1ₖ has accessed locally to a communication network via a detected access point 2ⱼ of an area 3, each new or updated main information relative to a detected access point 2ⱼ of this area 3 may be transmitted by a server 4ᵢ to this wireless communication equipment 1ₖ via the detected access point 2ⱼ it is connected to. This allows to quickly inform a wireless communication equipment 1ₖ of any change relative to any visible access point 2ⱼ comprised in its area 3, in order it could react consequently.

The control of this new or updated main information transmission may be carried out by the second device 6 of the concerned server 4ᵢ.

In the second step (ii) of the method the wireless communication equipment 1ₖ selects one of the detected access points 2ⱼ based on the retrieved information to access locally to the communication network to which is connected this selected access point 2ⱼ.

Thus, the wireless communication equipment 1ₖ may select the detected access points 2ⱼ that is considered as the safer or more reliable to access locally to a communication network.

As an example, in the case illustrated in the unique Figure, where the first 2₁ and fourth 2₄ access points are in white color (and therefore considered as safe), the second access point 2₂ is in light grey color (and therefore considered as unknown), and the third access point 2₃ is in dark grey color (and therefore considered as malicious), the first device 5 of the first wireless communication equipment 1₁ selects the first access point 2₁. It could have also select the fourth access point 2₄.

The invention is very useful not only for a wireless network operator to protect his clients (or subscribers), but also for a company to protect his employees. But it may be also very useful for other wireless network operators in the case where they share their respective main information, because, one attack seen by a user from a first operator can help to protect users from a second operator.

To this effect, servers 4ᵢ of at least some mobile network operators may be arranged for retrieving main information one from the other and for updating their main information from this retrieved main information. The control of this collaboration may be carried out by a third device 7 that is comprised into each server 4ᵢ.

Such a third device 7 is preferably made of software modules, at least partly. But it could be also made of a combination of hardware and software modules. In case where it is made of software modules it can be stored in a memory, possibly after having been downloaded, or in any computer software product.

Preferably, it is the second device 6 that is is charge of performing a new computation into a server 4ᵢ for updating a main information from another main information originating from another server 4_{i'}.

Another kind of collaboration may be simply broadcasting of main information about a dangerous access point 2ⱼ in the concerned area 3. For instance, an airport managing team can advertize of a local network attack ongoing at an airport terminal, like some alerts that can be heard in the subway.

The protocol used to exchange main information is preferably standard based. For instance it could be the STIX format ("Structured Threat Information eXpression").

The functions of the various elements shown in the figures, including any functional blocks labeled as "means" or "module", may be provided through the use of dedicated hardware as well as hardware capable of executing software in association with appropriate software.

It should be appreciated by those skilled in the art that any block diagrams herein represent conceptual views of illustrative circuitry embodying the principles of the invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for allowing a wireless communication equipment (1ₖ), client of a mobile network operator, to select an access point (2ⱼ) amongst several one located in an area (3) and offering a local access to at least one communication network, said method comprising a step (i) during which, when said wireless communication equipment (1ₖ) enters said area (3), it establishes a communication with a server (4ᵢ) of its mobile network operator, via a wireless communication network, to retrieve main information representative at least of a reputation of access points (2ⱼ) detected into said area (3), and a step (ii) during which said wireless communication equipment (1ₖ) selects one of said detected access points (2ⱼ) based on said retrieved information to access locally to said communication network.

2. Method according to claim 1, wherein said retrieved main information comprises at least a reputation level computed from primary information provided by wireless communication equipments (1ₖ) having accessed locally to said communication network via the access points (2ⱼ) of said area (3).

3. Method according to claim 2, wherein said primary information comprises data defining an access point (2ⱼ), a type of an event detected into a wireless communication equipment (1ₖ) during a local access to said access point (2ⱼ) and a date of occurrence of this detected event and/or a time of occurrence of this detected event and/or a duration of this detected event, each event type being an attack or a good behaviour.

4. Method according to claim 3, wherein each reputation level of an access point (2ⱼ) is equal to the sum of main values associated respectively to the different wireless communication equipments (1ₖ) having detected events during said local access via said access point (2ⱼ), and each equal to the result of a multiplication between a first value defining the type of the detected event and a second value representative of a freshness of this detected event.

5. Method according to one of claims 2 to 4, wherein each wireless communication equipment (1ₖ) is arranged for providing its primary information to said server (4ᵢ) of its mobile network operator either via a wireless communication network or via the selected access point (2ⱼ) it is connected to.

6. Method according to one of claims 2 to 5, wherein said retrieved main information further comprises a reputation age representative of a date at which a last corresponding reputation level has been computed from primary information and/or data justifying said last corresponding reputation level.

7. Method according to one of claims 1 to 6, wherein once a wireless communication equipment (1ₖ) has accessed locally to said communication network via a detected access point (2ⱼ) of said area (3), each new or updated main information relative to a detected access point (2ⱼ) of said area (3) is transmitted by said server (4ᵢ) to said wireless communication equipment (1ₖ) via said detected access point (2ⱼ).

8. Method according to one of claims 1 to 7, wherein said wireless communication equipment (1ₖ) detects any access point (2ⱼ) of said area (3) either by a radio connection scanning, or by a determination based on its geographical location, or else by an interpolation based on respective locations of antennas of a wireless communication network located into said area (3).

9. Method according to one of claims 1 to 8, wherein said servers (4ᵢ) of at least some mobile network operators are arranged for retrieving main information one from the other and for updating their main information from this retrieved main information.

10. Computer program product comprising a set of instructions arranged, when it is executed by processing means, for performing the method according to one of the preceding claims to allow a wireless communication equipment (1ₖ), client of a mobile network operator, to select an access point (2ⱼ) amongst several one located in an area (3).
